# EUROPÄISCHE PATENTANMELDUNG

(11) **EP 0 700 741 A1**
(43) Veröffentlichungstag der Anmeldung: **13.03.1996**
(21) Anmeldenummer: 95113748.8
(22) Anmeldetag: 01.09.1995
(51) Int. Cl.: B23B 5/28, B23Q 11/00

(54) **Drehmaschine zum gleichzeitigen Reprofilieren zweier Räder eines aus einem Schienenfahrzeug ausgebauten Radsatzes**

(30) Priorität: 06.09.1994 DE 9414398 U
(71) Anmelder: Hoesch Maschinenfabrik Deutschland GmbH, D-44145 Dortmund (DE)
(72) Erfinder: Kampmann, Werner, D-59439 Holzwickede-Hengsen (DE)

(57) **Zusammenfassung**

Bei einer Drehmaschine zum gleichzeitigen Reprofilieren zweier Räder eines aus einem Schienenfahrzeug ausgebauten Radsatzes, der zwischen zwei Körnerspitzen der Drehmaschine eingespannt ist, mit zwei Reitstöcken, einer Radsatz-Hub- und -Absenkvorrichtung, zwei Drehsupporten, zwei senkrecht über der Drehachse der Drehmaschine angeordneten Drehwerkzeugen und acht angetriebenen Reibrollen, von denen jeweils vier an die Lauffläche eines jeden Rades des Radsatzes andrückbar und einzeln um je eine parallel zur Drehachse der Drehmaschine angeordnete Schwenkachse in je einem Quadranten schwenkbar sind, wobei jede in dem zweiten und dritten Quadranten schwenkbare Reibrolle mit einem um die Reibrollenachse schwenkbaren Spanabweiser ausgeführt ist, der jeweils eine Reibrollenabdeckung und eine an die Lauffläche des Rades andrückbare Spanabstreifvorrichtung aufweist, wird ein Durchlauf eines Drehspans durch den Walzbereich zwischen jeder im zweiten Quadranten schwenkbaren Reibrolle und der Lauffläche eines jeden Rades des Radsatzes dadurch vermieden, daß die Spanabstreifvorrichtung (66, 67) eines jeden Spanabweisers (58, 60) der im Zweiten Quadranten (42) schwenkbaren Reibrollen (18, 22) schräg zur Drehachse (6) der Drehmaschine (1) angeordnet ist und daß der Spanabstreifvorrichtung (66, 67) eine an die Lauffläche (31, 32) des Rades (27, 28) andrückbare Spanfangvorrichtung (68, 69) nachgeordnet ist.

## Beschreibung

Die Erfindung bezieht sich auf eine Drehmaschine zum gleichzeitigen Reprofilieren zweier Räder eines aus einem Schienenfahrzeug ausgebauten Radsatzes, der zwischen zwei Körnerspitzen der Drehmaschine eingespannt ist, mit zwei Reitstöcken, einer Radsatz-Hub- und -Absenkvorrichtung, zwei Drehsupporten, zwei senkrecht über der Drehachse der Drehmaschine angeordneten Drehwerkzeugen und acht angetriebenen Reibrollen, von denen jeweils vier an die Lauffläche eines jeden Rades des Radsatzes andrückbar und einzeln um je eine parallel zur Drehachse der Drehmaschine angeordnete Schwenkachse in je einem Quadranten schwenkbar sind, wobei jede in dem zweiten und dritten Quadranten schwenkbare Reibrolle mit einem um die Reibrollenachse schwenkbaren Spanabweiser ausgeführt ist, der jeweils eine Reibrollenabdeckung und eine an die Lauffläche des Rades andrückbare Spanabstreifvorrichtung aufweist.

Es wird hier von einer Drehmaschine nach der europäischen Patentschrift 0 332 823 B1 ausgegangen, bei der die im zweiten und dritten Quadranten schwenkbaren Reibrollen mit je einem Spanabweiser ausgeführt sind.

Die bekannten Spanabweiser der im zweiten Quadranten schwenkbaren Reibrollen gewährleisten nicht immer ein Abweisen eines Drehspans, so daß gelegentlich ein Drehspan den Walzbereich zwischen Reibrolle und Lauffläche eines Rades des Radsatzes durchläuft.

In der Praxis führt dies mitunter zu Markierungen auf der bearbeiteten Lauffläche der Räder des Radsatzes, die unerwünscht sind.

Der Erfindung liegt die Aufgabe zugrunde, den Spanabweiser einer jeden im zweiten Quadranten schwenkbaren Reibrolle so auszubilden, daß ein Durchlauf eines Drehspans durch den Walzbereich zwischen Reibrolle und Lauffläche eines Rades des Radsatzes vermieden wird.

Erfindungsgemäß wird diese Aufgabe dadurch gelöst, daß die Spanabstreifvorrichtung eines jeden Spanabweisers der im zweiten Quadranten schwenkbaren Reibrollen schräg zur Drehachse der Drehmaschine angeordnet ist und daß der Spanabstreifvorrichtung eine an die Lauffläche des Rades andrückbare Spanfangvorrichtung nachgeordnet ist.

Die Spanfangvorrichtung weist mehrere nebeneinander angeordnete Spanfanglamellen auf.

Zweckmäßigerweise sind die Spanfanglamellen hakenförmig ausgebildet.

Nach einem weiteren Merkmal der Erfindung sind die Spanfanglamellen um einen parallel zur Reibrollenachse angeordneten Rundbolzen schwenkbar.

Jede Spanfanglamelle ist über ein Federelement vorgespannt.

Im folgenden wird die Erfindung anhand einer Zeichnung, in der ein Ausführungsbeispiel schematisch dargestellt ist, näher beschrieben.

Es zeigt
- Fig. 1: einen Teilschnitt durch eine Drehmaschine mit einem von ihr zentrierten Radsatz,
- Fig. 2: einen Teilausschnitt A der Fig. 1 in vergrößertem Maßstab,
- Fig. 3: eine Teilansicht in Richtung des Pfeiles B in Fig. 2 in vergrößertem Maßstab,
- Fig. 4: einen Schnitt entsprechend der Linie IV - IV in Fig. 3,
- Fig. 5: einen Teilschnitt entsprechend der Linie V - V in Fig. 3 in vergrößertem Maßstab.

Eine Drehmaschine 1, die nur teilweise dargestellt ist, hat zwei Reitstöcke 2, 3, zwei Drehsupporte 4, 5 mit je einem senkrecht über der Drehachse 6 der Drehmaschine 1 angeordneten Drehwerkzeug 7, 8, ein Maschinenbett (nicht dargestellt), eine Radsatz-Hub- und -Absenkvorrichtung (nicht dargestellt) und acht angetriebene, in je einer Schwinge 9, 10, 11, 12, 13, 14, 15, 16 drehbar gelagerte Reibrollen 17, 18, 19, 20, 21, 22, 23, 24.

Die beiden Reitstöcke 2, 3 und das Maschinenbett sind als portalförmige Baueinheit aufzufassen.

Ein zu bearbeitender Radsatz 25, der aus einer Radsatzwelle 26 und zwei Rädern 27, 28 besteht, ist zwischen zwei mitlaufenden Körnerspitzen 29, 30 zentriert bzw. eingespannt.

Von den acht Reibrollen 17 bis 24 sind jeweils vier (17 bis 20 und 21 bis 24) an die Lauffläche 31, 32 eines Rades 27, 28 andrückbar und einzeln um je eine parallel zur Drehachse 6 der Drehmaschine 1 angeordnete Schwenkachse 33, 34, 35, 36, 37, 38, 39, 40 in je einem Quadranten 41, 42, 43, 44 schwenkbar.

Die angetriebenen Reibrollen 17 bis 24 erteilen dem Radsatz 25 eine Drehbewegung in Richtung des Pfeils 45.

Zur Erzeugung der Schwenkbewegung einer jeden Reibrolle 17 bis 24 ist eine Verschiebevorrichtung 46, 47, 48, 49, 50, 51, 52, 53 vorgesehen.

Die in dem zweiten (42) und dritten Quadranten 43 schwenkbaren Reibrollen 18, 22; 19, 23 sind mit je einem um die Reibrollenachse 54, 56; 55, 57 schwenkbaren Spanabweiser 58, 60; 59, 61 versehen.

Der Spanabweiser 60 ist gegenüber dem Spanabweiser 58 spiegelbildlich ausgeführt. Der Späneabweiser 61 entspricht der spiegelbildlichen Ausführung des Spanabweisers 59.

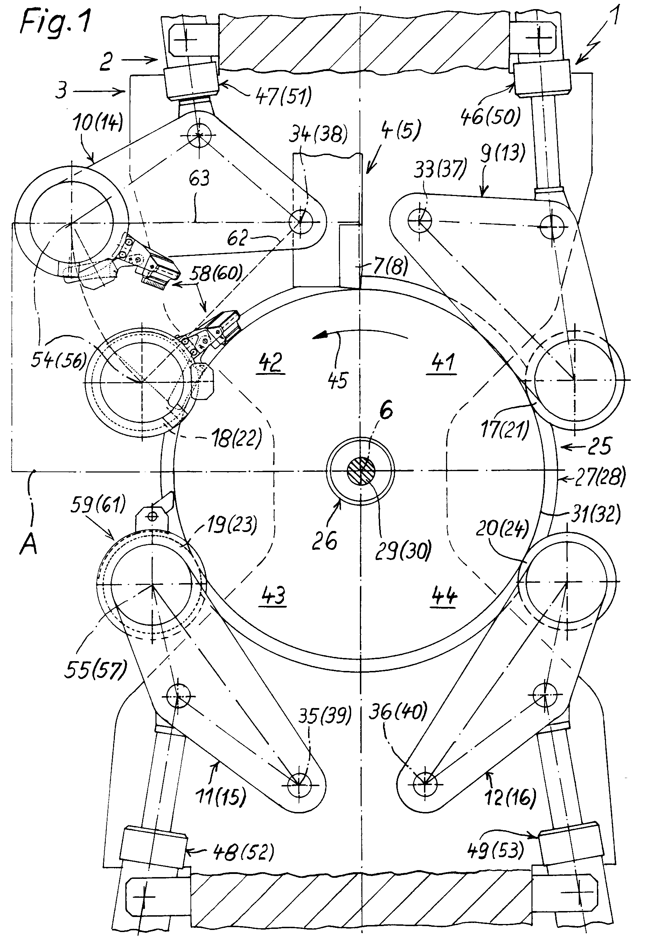

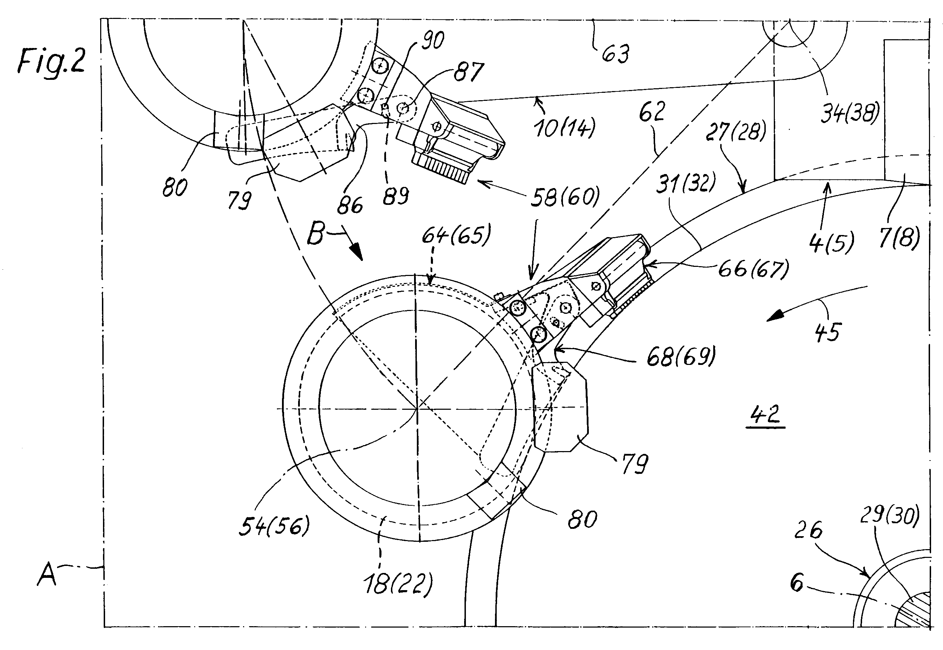

In den Fig. 1 und 2 sind die Arbeitsstellung (gestrichelte Linie 62) und die abgeschwenkte Stellung (Strichpunktlinie 63) der im zweiten Quadranten 42 schwenkbaren Reibrollen 18, 22 mit den zugehörigen Spanabweisern 58, 60 dargestellt.

Jeder Spanabweiser 58, 60 enthält eine Reibrollenabdeckung 64, 65, eine schräg zur Drehachse 6 der Drehmaschine 1 angeordnete Spanabstreifvorrichtung 66, 67 und eine Spanfangvorrichtung 68, 69.

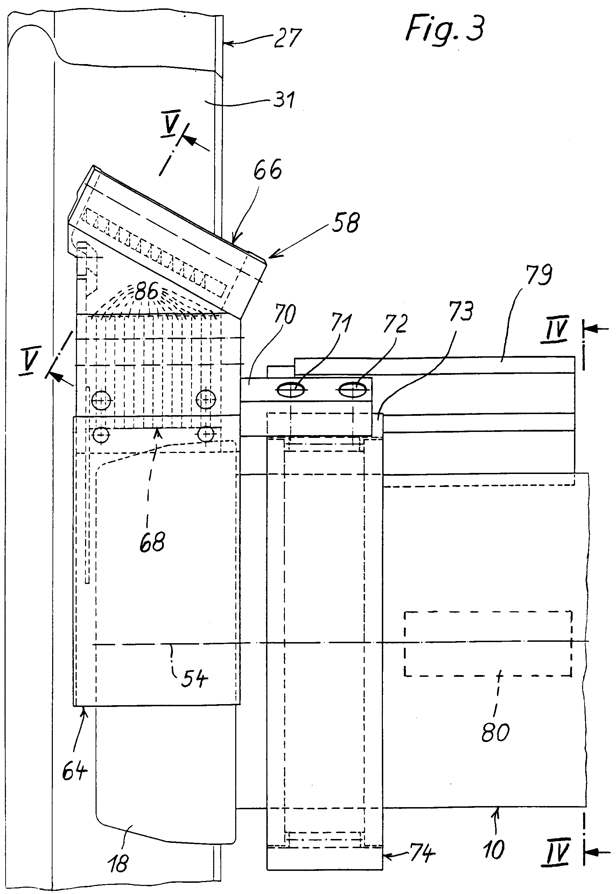

Die Reibrollenabdeckung 64 des Spanabweisers 58 hat einen Halter 70, der mit zwei Schrauben 71, 72 an einen um die Reibrollenachse 54 schwenkbaren Außenring 73 angeschraubt ist. Der Außenring 73 gehört zu einem auf der Schwinge 10 befestigten Radiallager 74 (Fig. 3).

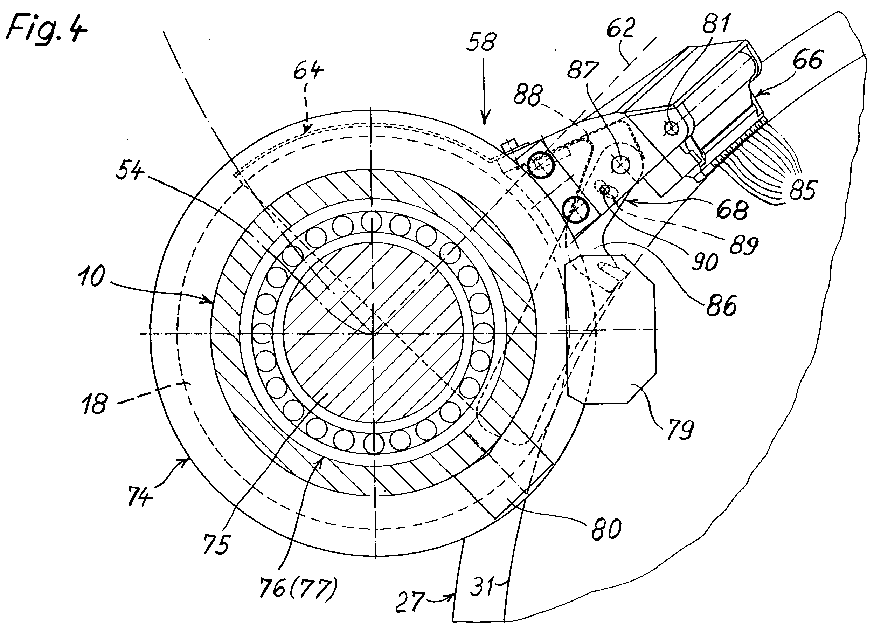

In Innern der Schwinge 10 ist die Antriebswelle 75 der Reibrolle 18 in zwei Kugel lagern 76, 77 gelagert (Fig. 4).

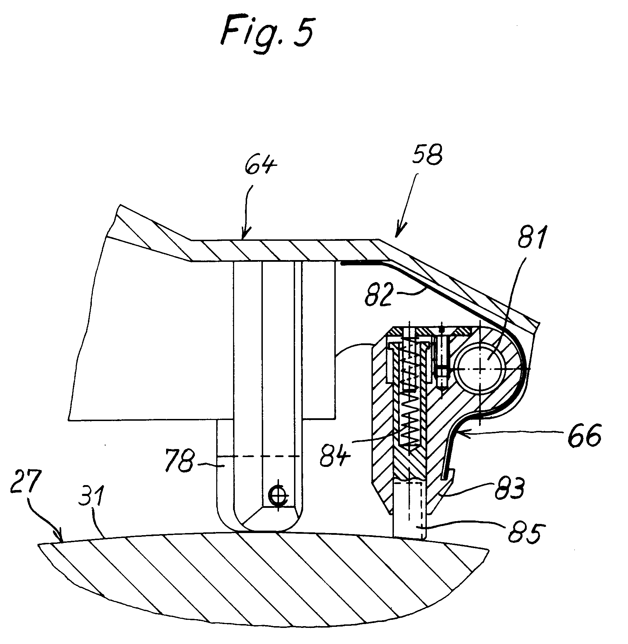

Die Spanabstreifvorrichtung 66 und die Spanfangvorrichtung 68 sind in Arbeitsstellung (gestrichelte Linie 62) der Reibrolle 18 auf die Lauffläche 31 des Rades 27 gedrückt. Dabei ergibt sich die Stellung der Reibrollenabdeckung 64 durch eine an ihr angebrachte Gleitstütze 78, die während der Radsatzbearbeitung auf der Lauffläche 31 gleitet (Fig. 5).

Die Andrückkraft für die Spanabstreifvorrichtung 66 und die Spanfangvorrichtung 68 wird erzeugt durch das Gewicht eines auf dem Außenring 73 befestigten Stahlblocks 79 und teilweise durch das Gewicht der Reibrollenabdeckung 64, der Spanabstreifvorrichtung 66 und der Spanfangvorrichtung 68.

In abgeschwenkter Stellung (Strichpunktlinie 63) der Reibrolle 18 stützt sich der Spanabweiser 58 über den Stahlblock 79 auf einem auf der Schwinge 10 einstellbaren Anschlag 80 ab.

Das Verschwenken der Reibrolle 18 von der Arbeitsstellung (gestrichelte Linie 62) in die abgeschwenkte Stellung (Strichpunktlinie 63) oder umgekehrt bewirkt stets ein Verschwenken des Spanabweisers 58 um die Reibrollenachse 54.

Die Spanabstreifvorrichtung 66 hat einen schräg zur Drehachse 6 der Drehmaschine 1 angeordneten Rundbolzen 81, um den ein mit einer Blattfeder 82 gehaltenes Gehäuse 83 schwenkbar ist. In dem Gehäuse 83 sind elf über je eine Schraubenfeder 84 vorgespannte Spanabstreiflamellen 85 nebeneinander angeordnet.

Das Gehäuse 83 und die Spanabstreiflamellen 85 bilden gegenüber der Lauffläche 31 des Rades 27 einen schräg wirksamen Pflug, wodurch im Regelfall ein seitliches Abgleiten der Drehspäne erreicht wird.

Diejenigen Spanabstreiflamellen 85, die während der Radsatzbearbeitung nicht immer auf der Lauffläche 31 des Rades 31 voll aufliegen, können jedoch ein Wandern von Drehspänen durch den Bereich zwischen Spanabstreiflamellen 85 und Lauffläche 31 nicht mit Sicherheit verhindern. Um ein Verwalzen von Drehspänen zwischen Reibrolle 18 und Lauffläche 31 zu vermeiden, ist der Spanabstreifvorrichtung 66 die Spanfangvorrichtung 68 nachgeordnet.

Die Spanfangvorrichtung 68 besitzt vierzehn nebeneinander angeordnete Spanfanglamellen 86, die um einen parallel zur Reibrollenachse 54 angeordneten Rundbolzen 87 schwenkbar sind.

Die Spanfanglamellen 86 sind hakenförmig ausgebildet und einzeln über je ein Federelement 88 vorgespannt.

In der abgeschwenkten Stellung (Strichpunktlinie 63) der Reibrolle 18 werden die mit je einem bogenförmigen Langloch 89 versehenen Spanfanglamellen 86 durch die Federelemente 88 an einen Anschlagstift 90 gedrückt.

## Patentansprüche

1. Drehmaschine zum gleichzeitigen Reprofilieren zweier Räder eines aus einem Schienenfahrzeug ausgebauten Radsatzes, der zwischen zwei Körnerspitzen der Drehmaschine eingespannt ist, mit zwei Reitstöcken, einer Radsatz-Hub- und -Absenkvorrichtung, zwei Drehsupporten, zwei senkrecht über der Drehachse der Drehmaschine angeordneten Drehwerkzeugen und acht angetriebenen Reibrollen, von denen jeweils vier an die Lauffläche eines jeden Rades des Radsatzes andrückbar und einzeln um je eine parallel zur Drehachse der Drehmaschine angeordnete Schwenkachse in je einem Quadranten schwenkbar sind, wobei jede in dem zweiten und dritten Quadranten schwenkbare Reibrolle mit einem um die Reibrollenachse schwenkbaren Spanabweiser ausgeführt ist, der jeweils eine Reibrollenabdeckung und eine an die Lauffläche des Rades andrückbare Spanabstreifvorrichtung aufweist, dadurch gekennzeichnet, daß die Spanabstreifvorrichtung (66, 67) eines jeden Spanabweisers (58, 60) der im zweiten Quadranten (42) schwenkbaren Reibrollen (18, 22) schräg zur Drehachse (6) der Drehmaschine (1) angeordnet ist und daß der Spanabstreifvorrichtung (66, 67) eine an die Lauffläche (31, 32) des Rades (27, 28) andrückbare Spanfangvorrichtung (68, 69) nachgeordnet ist.

2. Drehmaschine nach Anspruch 1, dadurch gekennzeichnet, daß die Spanfangvorrichtung (68, 69) mehrere nebeneinander angeordnete Spanfanglamellen (86) aufweist.

3. Drehmaschine nach den Ansprüchen 1 und 2, dadurch gekennzeichnet, daß die Spanfanglamellen (86) hakenförmig ausgebildet sind.

4. Drehmaschine nach den Ansprüchen 1 bis 3, dadurch gekennzeichnet, daß die Spanfanglamellen (86) um einen parallel zur Reibrollenachse (54, 56) angeordneten Rundbolzen (87) schwenkbar sind.

5. Drehmaschine nach den Ansprüchen 1 und 2, dadurch gekennzeichnet, daß jede Spanfanglamelle (86) über ein Federelement (88) vorgespannt ist.
